(19) **Europäisches Patentamt / European Patent Office / Office européen des brevets**

(11) **EP 3 467 778 A1**

(12) **EUROPEAN PATENT APPLICATION**

(43) Date of publication:
**10.04.2019 Bulletin 2019/15**

(51) Int Cl.:
*G06T 9/40* (2006.01)     *H04N 19/147* (2014.01)
*H04N 19/46* (2014.01)     *H04N 19/96* (2014.01)

(21) Application number: **17306344.7**

(22) Date of filing: **06.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
- **LASSERRE, Sebastien**
  **35576 CESSON-SEVIGNE (FR)**
- **JULLIAN, Remi**
  **35576 CESSON-SEVIGNE (FR)**
- **CHEVET, Jean-Claude**
  **35576 CESSON-SEVIGNE (FR)**

(74) Representative: **Huchet, Anne et al**
**InterDigital CE Patent Holdings**
**20, rue Rouget de Lisle**
**92130 Issy-les-Moulineaux (FR)**

(54) **A METHOD AND APPARATUS FOR ENCODING/DECODING THE GEOMETRY OF A POINT CLOUD REPRESENTING A 3D OBJECT**

(57)    The present principles relate to a method and device for encoding the geometry of a point cloud representing a 3D object. The method comprises:

a) obtaining (210) at least one candidate octree-based structure ($O_k$) with a maximum depth level ($\delta_k$) from the points of said point cloud, each candidate octree-based structure ($O_k$) approximating the geometry of the point cloud by points associated with leaf cubes, each leaf cube being associated with a leaf node of said candidate octree-based structure ($O_k$);

b) obtaining (230) a coding cost ($C_k$) for said at least one candidate octree-based structure ($O_k$) with a maximum depth level ($\delta_k$);

c) encoding (250) an optimal octree-based structure ($O_{opt}$) with a maximum depth level ($\delta_{opt}$) obtained by optimizing (240) said coding cost obtained for said at least one candidate octree-based structure ($O_k$); and

d) encoding (260) a depth information data ($DID_{opt}$) representative of the maximum depth level ($\delta_{opt}$) of said optimal octree-based structure ($O_{opt}$).

The present principles also relate to a decoding method and device.

**Fig. 2**

**Description**

**2. Field.**

The present principles generally relate to coding and decoding the geometry of a point cloud representing a 3D object. Particularly, but not exclusively, the technical field of the present principles are related to octree-based encoding/decoding of point cloud.

**3. Background.**

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

A point cloud is a set of points usually intended to represent the external surface of a 3D object but also more complex geometries like hair, fur that may not be represented efficiently by other data format like meshes. Each point of a point cloud is often defined by a 3D spatial location ($X$, $Y$, and $Z$ coordinates in the 3D space) and possibly by other associated attributes such as color, represented in the RGB or YUV color space for example, a transparency, a reflectance, a two-component normal vector, etc.

Point clouds may be static or dynamic depending on whether or not the cloud evolves with respect to time. It should be noticed that in case of a dynamic point cloud, the number of points is not constant but, on the contrary, generally evolves with time. A dynamic point cloud is thus a time-ordered list of sets of points.

Practically, point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such colored point clouds are typically static and huge.

Another use case is in topography and cartography in which, by using 3D representations, maps are not limited to the plane and may include the relief.

Automotive industry and autonomous cars are also domains in which point clouds may be used. Autonomous cars should be able to "probe" their environment to take safe driving decision based on the reality of their immediate neighboring. Typical sensors produce dynamic point clouds that are used by the decision engine. These point clouds are not intended to be viewed by a human being. They are typically small, not necessarily colored, and dynamic with a high frequency of capture. They may have other attributes like the reflectance that is a valuable information correlated to the material of the physical surface of sensed object and may help the decision.

Virtual Reality (VR) and immersive worlds have become a hot topic recently and foreseen by many as the future of 2D flat video. The basic idea is to immerse the viewer in an environment all round him by opposition to standard TV where he can only look at the virtual world in front of him. There are several gradations in the immersivity depending on the freedom of the viewer in the environment. Colored point clouds are a good format candidate to distribute VR worlds. They may be static or dynamic and are typically of averaged size, say no more than a few millions of points at a time.

Point cloud compression will succeed in storing/transmitting 3D objects for immersive worlds only if the size of the bitstream is low enough to allow a practical storage/transmission to the end-user.

It is also crucial to be able to distribute dynamic point clouds to the end-user with a reasonable consumption of bandwidth while maintaining an acceptable (or preferably very good) quality of experience. Similarly to video compression, a good use of temporal correlation is thought to be the crucial element that will lead to efficient compression of dynamic point clouds.

Well-known approaches project a point cloud representing the geometry and colors of a 3D object, onto the faces of a cube encompassing the 3D object to obtain videos on texture and depth, and code the texture and depth videos using a legacy encoder such as 3D-HEVC (an extension of HEVC whose specification is found at the ITU website, T recommendation, H series, h265, http://www.itu.int/rec/T-REC-H.265-201612-I/en annex G and I).

Performance of compression is close to video compression for each projected point, but some contents may be more complex because of occlusions, redundancy and temporal stability when dynamic point clouds are considered. Consequently, point cloud compression is more demanding than video compression in term of bitrates.

Regarding occlusions, it is virtually impossible to get the full geometry of a complex topology without using many projections. The required resources (computing power, storage memory) for encoding/decoding all these projections are thus usually too high.

Octree-based encoding is also a well-known approach for encoding the geometry of a point cloud. An octree-based structure is obtained for representing the geometry of the point cloud by splitting recursively a cube encompassing the point cloud until the leaf cubes, associated with the leaf nodes of said octree-based structure, contain no more than one point of the point cloud. The spatial locations of the leaf nodes of the octree-based structure thus represent the 3D spatial locations of the points of the point cloud, i.e. its geometry.

Such splitting process thus requires important resources in term of computing power because the splitting decision are done over the whole point cloud which may comprise a huge number of points.

Therefore, there is a trade-off to be found between obtaining a good representation of the geometry of a point cloud without using an optimization process having a high computing complexity.

## 4. Summary.

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

Generally speaking, the present principles relate to a method for encoding the geometry of points of a point cloud representing a 3D object comprising:

> a) obtaining at least one candidate octree-based structure with a maximum depth level from the points of said point cloud, each candidate octree-based structure approximating the geometry of the point cloud by points associated with leaf cubes, each leaf cube being associated with a leaf node of said candidate octree-based structure;
> b) obtaining a coding cost for said at least one candidate octree-based structure with a maximum depth level;
> c) encoding an optimal octree-based structure with a maximum depth level obtained by optimizing said coding cost obtained for said at least one candidate octree-based structure; and
> d) encoding a depth information data representative of the maximum depth level of said optimal octree-based structure. Basically, the method obtains a coding cost for each candidate octree-based structure with a specific maximum depth level (some of them may have a same maximum depth level) and encodes an optimal octree-based structure obtained by using a Rate-Distortion Optimization process based on said coding cost.

Moreover, encoding the maximum depth level of said optimal octree-based structure is advantageous especially for complex geometries because the extra bit-rate required to signal the maximum depth level of an octree-based structure is small relatively to the bit-rate used to code a leaf information associated with the leaf nodes of the octree-based structure at the maximum depth level indicating if these leaf nodes are split or not.

According to an embodiment, a coding cost obtained for a candidate octree-based structure depends on a distortion taking into account spatial distances between, on one hand, the points of the point cloud and on the other hand, the points associated with the leaf cubes of said candidate octree-based structure, and a bit-rate for encoding said candidate octree-based structure and for encoding its maximum depth level.

According to an embodiment, the method also comprises obtaining up-sampled points by up-sampling recursively points associated with leaf cubes of said at least one candidate octree-based structure until the resolution level of said points reaches an expected resolution level.

According to this embodiment, the method obtains up-sampled points for at least one candidate octree-based structure, obtains a coding cost for said candidate octree-based structure and encodes the optimal octree-based structure by using a Rate-Distortion Optimization process based on said coding cost.

Because the optimal octree-based structure is encoded, i.e. the points in the leaf cubes associated with the leaf node of said optimal octree-based structure (and not the up-sampled points), the information used to encode the optimal octree-based structure may be very compact. This is especially the case, for example, when the geometry (even complex) of the point cloud may be well-approximated by geometric surfaces (like planes) or volumes (like cubes).

Moreover, up-sampling points associated with leaf cubes of an octree-based structure improves the encoding decision by cancelling unwanted local depth effect on the distortion estimation in the Rate-Distortion Optimization loop. Otherwise, lower depth values would lead artificially to higher distortion due to the worse decoded point sampling, therefore lower depth configuration would be undesirably penalized and thus not selected by the RDO process.

According to an embodiment, the distortion takes into account spatial distances between, on one hand, the points of the point cloud and on the other hand, the up-sampled points.

The distortion thus quantifies more precisely the approximation of the points of the point because it takes into account all the points approximating those points of the point cloud.

According to an embodiment, the method also comprises a step of or the device also comprises means for:

- determining a global octree-based structure comprising at least one cube, by splitting recursively a cube encompassing the point cloud until the leaf cubes, associated with the leaf nodes of said global octree-based structure, reach down an expected size;
- encoding an octree information data representative of the global octree-based structure;
- encoding a leaf node information data indicating if a leaf cube associated with each leaf node of said global octree-based structure is coded or not;
- if the leaf node information data indicates that a leaf cube associated with a leaf node of said global octree-based structure is encoded, encoding the geometry of the points of the point cloud included in said leaf cube by executing the steps a-d).

This embodiment represents the geometry of a point cloud by a global octree-based structure, obtained by splitting the point cloud into multiple sub-points clouds, each localized in (encompassed by) a leaf cube of said global octree-based structure, and by local optimal octree-based structures, each obtained independently to each other by encoding the points of one of said sub-point cloud by using the above method.

Representing the geometry of a point cloud by a global octree-based structure and local optimal octree-based structures is advantageous because it allows to determine locally an optimal representation of the geometry, i.e. the optimization process optimizes the octree-based on a smaller amount of points, thus reducing dramatically the complexity of optimization which is usually done over the whole set of points of the point cloud.

Representing the geometry of a point cloud by a global octree-based structure and local optimal octree-based structures also allows to define an optimal octree-based structure with its optimal maximum depth level for approximating the geometry of the points of each of said sub-point clouds.

Representing the geometry of a point cloud by a global octree-based structure and local optimal octree-based structures thus provides the flexibility to adapt the maximum depth level locally. This is an interesting feature because simple geometries, like a plane or a surface locally close to plane, may be well coded with octrees with low maximum depth level. On the other hand, in order to preserve the fine structure of complex geometries, higher maximum depth levels are needed.

Also, the maximum depth level of an octree-based structure depends on the quality of coding: poorer quality will lead to lower maximum depth level. Consequently, optimal maximum depth level is a subtle combination of the local geometry complexity and the quality of coding. The prior art does not provide the capability to an encoder to find out this optimal maximum depth level.

Another advantage is to profit from the possibility of prediction of a local octree-based structure by an already coded neighboring octree-based structure. This advantage is similar to the advantage of decomposing an image into coding blocks as performed in many video compression standards, for instance in HEVC, and then using intra prediction between blocks (here intra prediction of octree-based structure).

Also, considering, dynamic point clouds, it is possible to obtain a temporal prediction of a local optimal octree-based structure from already coded points at a preceding time. Again, this advantage is similar to the advantage of inter temporal prediction between blocks as applied in many video compression standards. Using local octree-based structures allows for a practical motion search because it is performed on a reasonable amount of points.

According to an embodiment, encoding an octree-based structure comprises encoding an octree information data representative of said optimal octree-based structure, and a leaf node information data indicating if a leaf cube of said octree-based structure includes a point representative of at least one point of the point cloud.

According to an embodiment, an octree information data may comprise a binary flag per node to indicate if a cube associated with a node is split or not except for the nodes at the maximum depth level of said octree-based structure.

According to another of their aspects, the present principles relate to a method for decoding, from a bitstream, the points of a point cloud representing a 3D object comprising:

a) decoding a depth information data representative of a maximum depth level of said octree-based structure.

b) decoding, from the bitstream and according to the maximum depth level, an octree information data representative of an octree-based structure, and a leaf node information data indicating if a leaf cube of said octree-based structure includes a point representative of at least one point of the point cloud; and

c) obtaining an octree-based structure from the octree information data, and if the leaf node information data indicates that a leaf cube of said octree-based structure includes a point representative of at least one point of the point cloud, adding a point to said leaf cube.

According to an embodiment, the method also comprises obtaining up-sampled points by up-sampling recursively points associated with leaf cubes of said at least one octree-based structure until the resolution level of said points reaches an expected resolution level.

According to an embodiment, the method also comprises the steps of or the device also comprises means for:

- decoding, from the bitstream, an octree information data representative of a global octree-based structure;
- obtaining said global octree-based structure from the octree information data;
- decoding, from the bitstream, a leaf node information data indicating if a leaf cube associated with each leaf node of said global octree-based structure is encoded or not; and
- if the leaf node information data indicates that a leaf cube associated with a leaf node of said global octree-based structure is coded, decoding points included in said leaf cube by executing the steps a-c);

and

- fusing the decoded points for all the leaf cubes of said global octree-based structure.

According to an embodiment, decoding an octree-based structure comprises decoding an octree information data representative of said optimal octree-based structure, and a leaf node information data indicating if a leaf cube of said octree-based structure includes a point representative of at least one point of the point cloud.

According to an embodiment, an octree information data may comprise a binary flag per node to indicate if a cube associated with a node is split or not except for the nodes at the maximum depth level of said octree-based structure.

According to another of its aspects, the present principles relates to a signal carrying information data representative of a point cloud, wherein the signal also carries:

- at least one octree information data representative of at least one octree-based structure; and
- at least one leaf node information data indicating if a leaf cube of said at least one octree-based structure includes a point representative of at least one point of the point cloud; and
- at least one depth information data representative of the maximum depth level of said at least one octree-based structure.

According to an embodiment, said at least one octree information data comprises a binary flag per node to indicate if a cube associated with a node is split or not except for the nodes at the maximum depth level of said at least one octree-based structure.

According to another of their aspects, the present principles also relate to device comprising means for implementing the above methods, and to a non-transitory processor-readable medium having stored thereon instructions to execute the steps of an above method when this program is executed on a computer.

The specific nature of the present principles as well as other objects, advantages, features and uses of the present principles will become evident from the following description of examples taken in conjunction with the accompanying drawings.

## 5. Brief Description of Drawings.

In the drawings, examples of the present principles are illustrated. It shows:

- **Fig. 1** illustrates an example of an octree-based structure;
- **Fig. 2** shows schematically a diagram of the steps of the method for encoding the geometry of a point cloud representing a 3D object in accordance with an example of the present principles;
- **Fig. 3** shows schematically a diagram of the steps of the method for up-sampling recursively the points associated with leaf cubes of an octree-based structure with a maximum depth level in accordance with an example of the present principles;
- **Figs. 4a-b** illustrate the up-sampling of a leaf cube in accordance with an example of the present principles;
- **Fig. 5** illustrates a variant of the method of **Fig. 3** in accordance with an example of the present principles;
- **Fig. 6** shows the diagram of the sub-steps of the step 230 in accordance with an embodiment of the present principles;
- **Fig. 6a-b** shows the effect of the knowledge of the maximum depth level on the representation of an octree-based structure.
- **Fig. 7** shows schematically a diagram of the steps of a variant of the method of **Fig. 2**;
- **Fig. 8** shows an illustration of an example of a candidate octree-based structure;
- **Fig. 9** shows schematically a diagram of the steps of the method for decoding, from a bitstream, the points of a point cloud representing a 3D object in accordance with an example of the present principles;
- **Fig. 10** shows schematically a diagram of the steps of a variant of the method of **Fig. 9**;
- **Fig. 11** shows an example of an architecture of a device in accordance with an example of present principles; and
- **Fig. 12** shows two remote devices communicating over a communication network in accordance with an example of present principles;
- **Fig. 13** shows the syntax of a signal in accordance with an example of present principles;

Similar or same elements are referenced with the same reference numbers.

## 6. Description of Example of the present principles.

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims.

While not explicitly described, the present examples and variants may be employed in any combination or sub-combination.

The present principles are described for encoding/decoding a point cloud but extends to the encoding/decoding of a sequence of point clouds because each colored point cloud of the sequence is sequentially encoded/decoded as described below.

An octree-based structure comprises a root node, at least one leaf node and possibly intermediate nodes. A leaf node is a node of the octree-based cube which has no child. All other nodes have children. Each node of an octree-based structure is associated with a cube. Thus, an octree-based structure comprises a set $\{C_j\}$ of at least one cube $C_j$ associated with node(s).

A leaf cube is a cube associated with a leaf node of an octree-based structure.

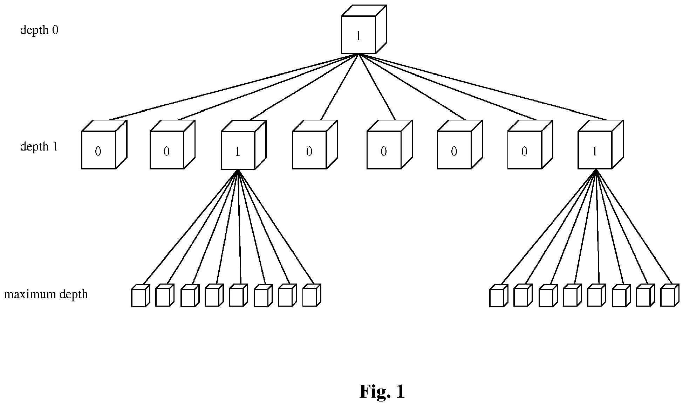

In the example illustrated on **Fig. 1**, the cube associated with the root node (depth 0) is split into 8 subcubes (depth 1) and two sub-cubes of depth 1 are then split into 8 sub-cubes (maximum depth level = 2).

The sizes of the cubes of a same depth are usually the same but the present principles are not limited to this example. A specific process may also determine different numbers of sub-cubes per depth level, when a cube is split, and/or multiple sizes of cubes of a same depth level or according to their depths.

A maximum depth level of an octree-based structure is the depth level at which none of the leaf cubes is split. Thus, an octree-based structure may have a leaf node at the maximum depth level but also to other depth levels lower than the maximum depth level.

In the following, the term "local octree-based structure" refers to an octree-based structure determined from a sub-part of the points of the point cloud to be encoded.

In the opposite, a global octree-based structure refers to an octree-based structure determined from all the points of the point cloud to be encoded.

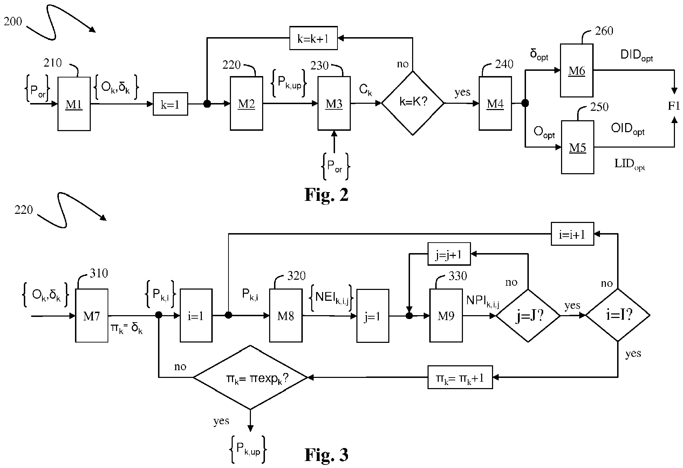

**Fig. 2** shows schematically a diagram of the steps of a method 200 for encoding the geometry of points $P_{or}$ of a point cloud IPC representing a 3D object in accordance with an example of the present principles.

Basically, a Rate Distortion optimization (RDO) process is used to determine a best octree-based structure $O_{opt}$ with a maximum depth level $\delta_{opt}$ from K candidate octree-based structures $O_k$ ($k \in [1; K]$) for encoding the points $P_{or}$.

The basic principle is to test successively each candidate octree-based structure $O_k$ and for each candidate octree-based structure $O_k$ to calculate a Lagrangian cost $C_k$ given by:

$$C_k = D_k + \lambda R_k \qquad (1)$$

where $R_k$ is a bit-rate for encoding the current candidate octree-based structure $O_k$ and for encoding its maximum depth level $\delta_k$, $D_k$ a distortion metric detailed below, and $\lambda$ is a fixed Lagrange parameter that may be fixed for all the candidate octree-based structures $O_k$.

The best octree-based structure $O_{opt}$ is then obtained by minimizing the Lagrangian cost $C_k$:

$$O_{opt} = \underset{O_k}{\operatorname{argmin}} C_k(O_k) \qquad (2)$$

High values for the Lagrangian parameter strongly penalize the bit-rate $R_k$ and lead to a low quality of approximation, while low values for the Lagrangian parameter allow easily high values for $R_k$ and lead to high quality of approximation. The range of values for lambda depends on the distortion metric and most importantly the distance between two adjacent points. Assuming that this distance is unity, typical values for lambda are in the range from a few hundreds, for very poor coding, to a tenth of unity for good coding. These values are indicative and may also depend on the content.

In step 210, a module M1 obtains at least one candidate octree-based structure $O_k$ with a maximum depth level $\delta_k$ from the points $P_{or}$.

Each candidate octree-based structure $O_k$ approximates the geometry of the point cloud IPC by points associated with leaf cubes, each leaf cube being associated with a leaf node of said candidate octree-based structure $O_k$.

For example, a candidate octree-based structure $O_k$ may be obtained by fixing a maximum depth level $\delta_k$ and splitting recursively an initial cube encompassing the points $P_{or}$ until the maximum depth level $\delta_k$ is reached and while a leaf cube comprises at least one of the points $P_{or}$. Next, when a leaf cube is associated with at least one points $P_{or}$, a point is associated with said leaf cube, preferably in its center, to approximate said at least one point $P_{or}$. Thus, a leaf cube at the maximum depth level $\delta_k$ may then comprise at most one point. The geometry of the point cloud IPC is then approximated by the points associated with the leaf cubes of a candidate octree-based structure $O_k$.

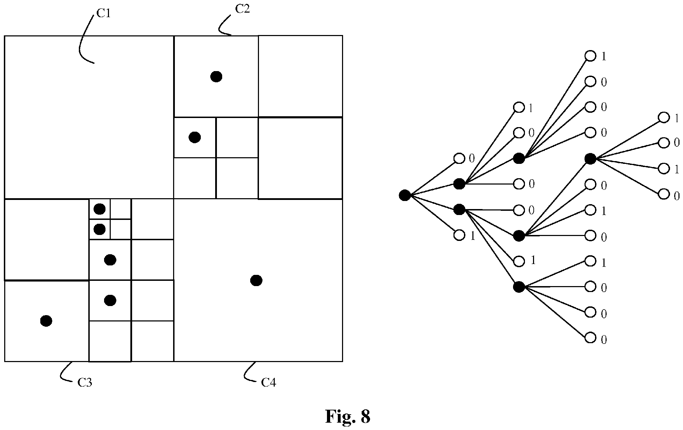

**Fig. 8** shows an illustration of an example of a candidate octree-based structure $O_k$. This figure represents an example of a quadtree-based structure that splits a square, but the reader will easily extend it to the 3D case by replacing the square by a cube.

According to this example, the cube is split into 4 sub-cubes C1, C2 C3 and C4 (depth 1). The sub-cube C1 is associated with a leaf node and does not contain any point. The sub-cube C2 is recursively split into 4 sub-cubes (depth 2). The sub-cube C3 is also recursively split and the sub-cube C4 is not split but a point, located in the center of the cube for example, is associated with it, ..., etc.

On the right part of **Fig. 8** is shown an illustration of the candidate octree-based structure with a maximum depth level $\delta_k=4$. A black circle indicates that a node is split. A binary flag is associated with each white circle (leaf node) to indicate if the square (a cube in the 3D case) includes (1) or not (0) a point.

According to this example, a point is located in the center of a cube because it avoids any additional information about the spatial location of that point once the cube is identified in the octree-based structure. But the present principles are not limited to this example and may extend to any other spatial location of a point in a cube.

The present principles are not limited to the candidate octree-based structure illustrated on **Fig. 8** but extend to any other octree-based structure comprising at least one leaf node associated with a leaf cube including at least one point.

The steps 220-230 are executed iteratively for each candidate octree-based structure $O_k$.

In an optional step 220 of **Fig. 2**, a module M2 obtains up-sampled points $P_{k,up}$ by up-sampling recursively points $P_k$ associated with leaf cubes of the candidate octree-based structure until the resolution level $\pi_k$ of said points $P_k$ reaches an expected resolution level $\pi exp_k$, that is the resolution (precision) level associated with a regular 3D grid of step the size of cubes of maximum depth level $\delta exp_k$.

Said expected resolution level $\pi exp_k$ is thus strongly linked with the maximum depth level $\delta exp_k$ of the octree-based structure. Typically, the maximum depth level $\delta exp_k$ (and thus the expected resolution level $\pi exp_k$) would be associated with leaf cubes of unitary size, i.e. the minimum size of a "3D pixel" (= a small cube) in the rendering process of the point cloud.

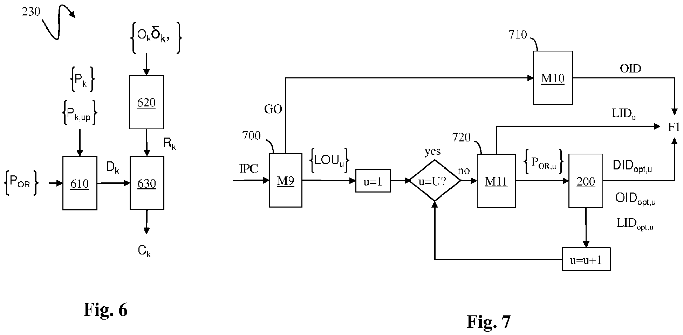

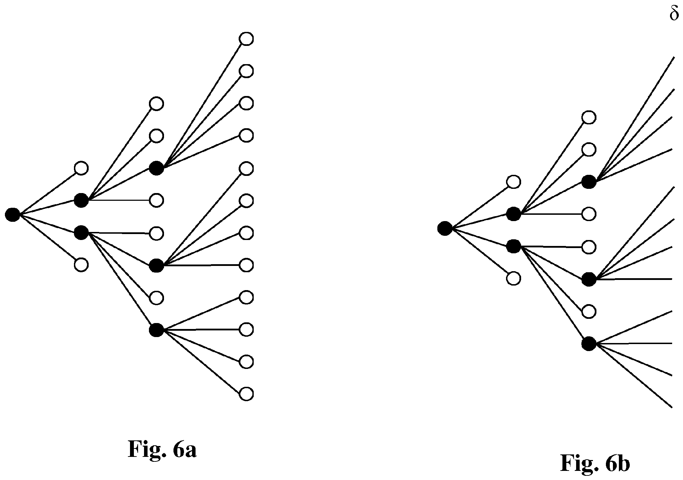

In step 230, a module M3 obtains a coding cost $C_k$ for the candidate octree-based structure $O_k$ with a maximum depth level ($\delta_k$) as described in relation with **Fig. 6**.

In step 240, a module M4 obtains the best octree-based structure $O_{opt}$ with a maximum depth level $\delta_{opt}$ according to equations (1) and (2) once all the candidate octree-based structures $O_k$ have been considered.

In step 250 a module M5 encodes the optimal octree-based structure $O_{opt}$ with a maximum depth level $\delta_{opt}$.

According to an embodiment, the optimal octree-based structure $O_{opt}$ with a maximum depth level $\delta_{opt}$ is encoded by an octree information data $OID_{opt}$ representative of said optimal octree-based structure $O_{opt}$, and a leaf node information data $LID_{opt}$ indicating if a leaf cube of said optimal octree-based structure $O_{opt}$ includes a point representative of at least one point $P_{or}$.

In step 260, a module M6 encodes a depth information data $DID_{opt}$ representative of said maximum depth level $\delta_{opt}$.

Said variant reduces the coding cost of the optimal octree-based structure $O_{opt}$ as explained below in relation with **Fig. 6a-b**.

The octree information data $OID_{opt}$, the leaf node information data $LID_{opt}$ and the depth information data $DID_{opt}$ may be stored and/or transmitted in a bitstream F1.

**Fig. 3** shows schematically a diagram of the steps of the method for up-sampling recursively the points $P_k$ associated with leaf cubes of an octree-based structure $O_k$ with a maximum depth level $\delta_k$ in accordance with an embodiment of step 220.

In step 310, a module M7 obtains a set of I point $P_{k,i}$ (I is greater than or equals 1) from the octree-based structure $O_k$. Each of said points $P_{k,i}$ is located at the center of a leaf cube $C_{k,i}$ itself associated with a leaf node $N_{k,i}$ at the maximum depth level $\delta_k$. Assuming that all cubes of a same depth have a same size, the points $P_{k,i}$ are positioned on a regular 3D grid of step the size of the cube of maximum depth level $\delta_k$. The points $P_{k,i}$ of this grid are said to be of resolution level $\pi_k = \delta_k$.

Some of the leaf nodes $N_{k,q}$ may have a depth level $\delta_q$ lower than the maximum depth level $\delta_k$.

According to a variant of step 310, the octree-based structure $O_k$ is completed by splitting recursively the leaf cubes associated with said leaf nodes $N_{k,q}$ until their depth level reaches the maximum depth level $\delta_k$. At each iteration, eight child nodes are added to the octree-based structure with a point $P_{k,i}$ preferably located in the center of each of the eight child nodes.

The purpose of the up-sampling process is to up-sample said points $P_{k,i}$ up to the expected resolution level $\pi exp_k$.

At each iteration, the set of I points $P_{k,i}$ is considered.

In step 320, a point $P_{k,i}$ is considered. A module M8 determines if a neighbor (on the regular 3D grid) point $NEI_{k,i,j}$ is located in a neighborhood of the point $P_{k,i}$, and, for each of the J neighbor points $NEI_{k,i,j}$, in step 330, a module M9 determines a new point $NP_{k,i,j}$. The new point $NP_{k,i,j}$ is located at the middle of a segment joining the point $P_{k,i}$ and the neighbor point $NEI_{k,l,j}$.

The new points $NP_{k,i,j}$ are added to the set of points $P_{k,i}$ and the new set of points $P_{k,i}$ is considered for the next iteration. The points of the new set of points $P_{k,i}$ are located on a new regular 3D grid of step half the step of the regular grid on which the points of the old set of points $P_{k,i}$ are located. In other words, the resolution (precision) level of the grid has been increased by 1 during the steps 320 and 330.

The iterations stop when the resolution level $\pi_k$ of the points $P_{k,i}$ reaches the expected resolution level $\pi exp_k$, at each iteration the resolution level $\pi_k$ being increased by 1.

The output of **Fig. 3** is the set of points $P_{k,i}$ obtained after the last iteration, this last set being referred as up-sampled points $P_{k,up}$.

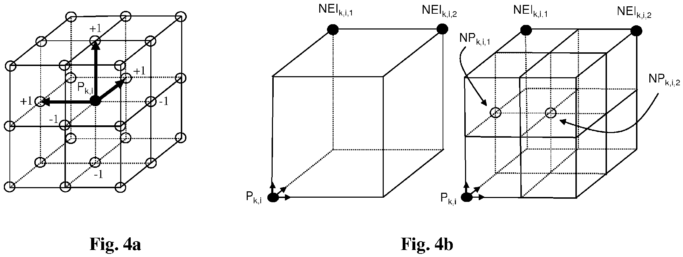

**Figs. 4a-b** illustrate the determination of neighbor points $NEI_{k,i,j}$ and new point $NP_{k,i,j}$ in steps 320 and 330.

In **Fig. 4a**, is represented all possible neighboring points (white circles) of a point $P_{k,i}$ (black point). The regular 3D grid represented on the figure is of resolution level $\pi_k$ as the resolution level of the grid of the point $P_{k,i}$ is $\pi_k$.

The neighborhood of this point $P_{k,i}$ is defined, according to an embodiment, by adding the values +S, 0 or -S to at least one of the coordinates of the point $P_{k,i}$, where S is the step of the regular 3D grid of resolution level $\pi_k$. S=1 for the example illustrated on **Fig. 4a**. Then, the point $P_{k,i}$ may have at most 26 neighbor points represented by circles.

In **Fig. 4b**, is represented an example wherein the point $P_{k,i}$ has two neighbor points $NEI_{k,i,1}$ and $NEI_{k,i,2}$. A new point $NP_{k,i,1}$ is added at the middle of a segment defined by the points $P_{k,i}$ and $NEI_{k,i,1}$, and a new point $NP_{k,i,2}$ is added at the middle of a segment defined by the points $P_{k,i}$ and $NEI_{k,i,2}$.

The present principles are not limited to this example but may extend to any other method for defining a neighborhood of the point $P_{k,i}$ and to any other method for defining a new point from two existing points located in a neighborhood of the point $P_{k,i}$.

Determining if a neighbor point $NEI_{k,i,j}$ is located in a neighborhood of the point $P_{k,i}$ as described above leads to many couples of points to be checked as illustrated in **Fig. 4a**.

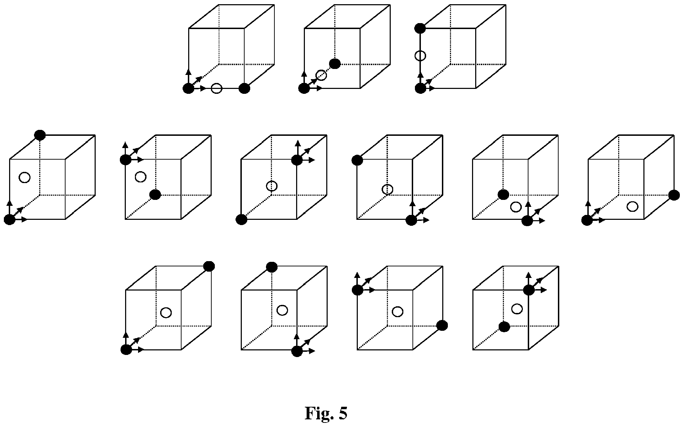

This number of 26 couple of points to be checked may be reduced to 13 according to a variant illustrated in **Fig. 5** where 3 of said 13 couples of points consider neighbor points along segment starting from the point $P_{k,i}$, 6 of said 13 couples of points consider neighbor points along small diagonal starting from the point $P_{k,i}$, and 4 of said 13 couples of points consider the neighbor points along all long diagonal starting from the point $P_{k,i}$.

Said variant avoids thus to check twice the same couple of points, thus the number of 26/2=13 couples to be checked in step 320.

According to an embodiment of step 230, illustrated in **Fig. 6**, in step 610, the module M3 obtains the distortion $D_k$ taking into account spatial distances between, on one hand, the points $P_{or}$, and on the other hand, the points $P_k$ associated with the leaf cubes of a candidate octree-based structure $O_k$.

Mathematically speaking, the distortion $D_k$ is a metric given by:

$$D_k = d(P_k, P_{OR}) + d(P_{OR}, P_{k,})$$

where d(A,B) is a metric that measures the spatial distance from a set of points A to a set of points B. This metric is not symmetric, this means that distance from A to B differs from the distance from B to A.

The distance $d(P_k, P_{OR})$ ensures that the points $P_k$ are not too far from the points of the point cloud IPC, avoiding coding irrelevant points.

The distance $d(P_{OR},P_k)$ ensures that each point of the point cloud IPC is approximated by points not too far from them, i.e. ensures that all parts of the point cloud IPC are well approximated.

According to an embodiment, the distance d(A,B) is given by:

$$d(A, B) = \sum_{p \in A} \| p - q_{closest}(p, B) \|_2^2$$

where the norm is the Euclidan distance and $q_{closest}(p,B)$ is the closest point of B from a point p of A defined as

$$q_{closest}(p, B) = \underset{q \in B}{\mathrm{argmin}} \| p - q \|_2^2.$$

According to an embodiment of step 230, illustrated in **Fig. 6**, in step 610, the module M3 obtains the distortion $D_k$ taking into account spatial distances between, on one hand, the points $P_{or}$, and on the other hand, the points $P_{k,up}$.

Mathematically speaking, the distortion $D_k$ is a metric given by:

$$D_k = d\left(P_{k,up}, P_{OR}\right) + d\left(P_{OR}, P_{k,up}\right)$$

In step 620, the module M3 obtains the bit-rate $R_k$ for encoding the candidate octree-based structure $O_k$ and for encoding its maximum depth level $\delta_k$.

Said bit-rate $R_k$ depends on the bit-rate for encoding an octree information data $OID_k$ representative of said candidate octree-based structure $O_k$, for encoding a maximum depth level $\delta_k$, and for encoding a leaf node information data $LID_k$ indicating if a leaf cube of said candidate octree-based structure $O_k$ includes a point representative of at least one point $P_{or}$.

Encoding the maximum depth level $\delta_k$ reduces the bit-rate of a candidate octree-based structure $O_k$ as explained below in relation with **Fig. 6a-b**.

In step 630, the module M3 calculates the Lagrangian cost $C_k$ according to equation (1) for the candidate octree-based structure $O_k$ with maximum depth level $\delta_k$.

**Fig. 7** shows schematically a diagram of the steps of a variant of the method of **Fig. 2**.

In step 700, a module M9 determines a global octree-based structure GO comprising at least one cube, by splitting recursively a cube encompassing the point cloud IPC until the leaf cubes, associated with the leaf nodes of said global octree-based structure GO, reach down an expected size.

The leaf cubes associated with the leaf nodes of the global octree-based structure GO may then include

or not points $P_{or}$ of the point cloud IPC. A leaf cube associated with a leaf node of the global octree-based structure GO is named in the following a Largest Octree Unit ($LOU_u$), **u** means an index referencing the Largest Octree Unit associated with a leaf node **u** of the global octree-based structure GO.

In step 710, a module M10 encodes an octree information data OID representative of the global octree-based structure GO.

In step 720, for each $LOU_u$ (u=1,...,U), a module M11 determines if at least one point $P_{or}$ is associated with a $LOU_u$.

As discussed above, it may happen that a $LOU_u$ does not include any point $P_{or}$ of the point cloud IPC. In that case the $LOU_u$ is named a non-coded $LOU_u$.

If at least one point of $P_{or}$ is associated with a $LOU_u$, the points $P_{or,u}$ (i.e. the points among points $P_{or}$ which are included in said $LOU_u$) are encoded as described in relation with the method 200 illustrated in **Figs. 2-6b**.

The suffix u indicates that the elements are those which are located in a $LOU_u$. For example, an optimal octree-based structure $O_{opt,u}$ refers to an optimal octree-based structure for encoding points in a $LOU_u$, a candidate octree-based structures $O_{k,u}$ is a candidate octree-based structure for a $LOU_u$ (step 210), a set of points $P_{k,i,u}$ refers to points which are included in cubes associated with leaf nodes of a candidate octree-based structure $O_{k,u}$, etc.

It may also happen that the encoding method 200 determines that the points $P_{or,u}$ are not coded by any candidate octree-based structure $O_{k,u}$. This is the case, for example, when the cost for coding those points is too high relatively to the cost associated with $R_{k,u} = 0$ and the distortion $D_{k,u}$ obtained between already coded points, from other already coded $LOU_u$ for example, and the points $P_{or,u}$. In that case the $LOU_u$ is also named a non-coded $LOU_u$.

The module M11 also encodes a leaf node information data $LID_u$ indicating if a $LOU_u$ is a coded or non-coded $LOU_u$.

If the leaf node information data $LID_u$ indicates that a $LOU_u$ is a non-coded $LOU_u$, a leaf node information data $LID_u$ is encoded.

If the leaf node information data $LID_u$ indicates that a $LOU_u$ is a coded $LOU_u$, in step 200, the module M5 encodes an octree information data $OID_{opt,u}$ representative of a local optimal octree-based structure $O_{opt,u}$ with a maximum depth level $\delta_{opt,u}$, a depth information data $DID_{opt,u}$ representative of said maximum depth level $\delta_{opt,u}$, and a leaf node information data $LID_{opt,u}$ indicating if a leaf cube of said local optimal octree-based structure $O_{opt,u}$ includes a point representative of at least one point $P_{or}$.

Encoding said maximum depth level $\delta_{opt,u}$ reduces the coding cost of a local optimal octree-based structure $O_{opt,u}$ as explained below.

The octree information data OI, the leaf infor-

mation data $LID_u$, the octree information data $OID_{opt,u}$, the leaf node information data $LID_{opt,u}$ and, the depth information data $DID_{opt,u}$ may be stored and/or transmitted in a bitstream F1.

According to an embodiment of the encoding method, an octree information data (OID, $OID_k$, $OID_{opt}$, $OID_{opt,u}$) may comprise a binary flag per node to indicate if a cube associated with a node is split or not

According to an embodiment of the encoding method, a leaf node information data ($LID_k$, $LID_{opt}$, $LID_{opt,u}$) may comprise a binary flag indicating if a leaf cube of an octree-based structure includes or not a point representative of at least one point $P_{or}$.

According to an embodiment of the encoding method, another leaf node information ($LID_u$) may comprise at least one bit indicating if a $LOU_u$ is a coded or a non coded leaf cube.

According to an embodiment of the encoding method, a depth information data ($DID_k$, $DID_{opt}$, $DID_{opt,u}$) may comprise a set of bits representative of a maximum depth level of an octree-based structure.

According to an embodiment of the encoding method, the octree information data (OID, $OID_k$, $OID_{opt}$, $OID_{opt,u}$) and/or the leaf node information data ($LID_k$, $LID_{opt}$, $LID_{opt,u}$, $LID_u$) and/or the depth information data ($DID_k$, $DID_{opt}$, $DID_{opt,u}$) may be coded using an entropy coder like CABAC (a description of the CABAC is found in the specification of HEVC at http://www.itu.int/rec/T-REC-H.265-201612-I/en).

Entropy encoding the octree information data (OID, $OID_k$, $OID_{opt}$, $OID_{opt,u}$) and/or the leaf node information data ($LID_k$, $LID_{opt}$, $LID_{opt,u}$, $LID_u$) may be efficient in term of coding, because specific contexts may be used to code the binary flags per node because the probability for the binary flags associated with neighboring nodes to have a same value is high.

According to a variant of the encoding method, the binary flags indicating if cubes associated with nodes are split or not are not encoded for the nodes at a maximum depth level ($\delta_k$, $\delta_{opt}$, $\delta_{opt,u}$). Thus, the octree information data ($OID_k$, $OID_{opt}$, $OID_{opt,u}$) comprises a binary flag per node to indicate that a cube associated with a node is split or not except for the nodes at the maximum depth level ($\delta_k$, $\delta_{opt}$, $\delta_{opt,u}$).

According to this variant, the knowledge of the maximum depth level ($\delta_k$, $\delta_{opt}$, $\delta_{opt,u}$) is thus used to lessen the number of binary flags in the octree information data (OID, $OID_k$, $OID_{opt}$, $OID_{opt,u}$) as illustrated on **Fig. 6a-b**. The bit-rate for encoding an octree-based structure is thus reduced.

On **Fig. 6a** is shown an illustration of an octree-based structure with maximum depth level $\delta$. The octree-based structure is the example of the octree-based structure shown in **Fig. 8** but with a maximum depth level $\delta=3$.

In **Figs. 6a** and **6b**, are shown the binary flags (black/white circles) of the octree information data: a black circle means a node is split and a white circle means a node is a leaf node.

In **Fig. 6a**, without the knowledge of the maximum depth level $\delta$, the right-most nodes, i.e. the nodes at the maximum depth level, have to be indicated as non-split (white circles) by binary flags set to zero.

In **Fig. 6b**, knowing the maximum depth level $\delta$, these right-most nodes are implicitly known to be non-split and the associated zero-valued binary flags do not need to be included in the octree information data.

Consequently, the bit-rate for encoding the octree information data is usually considerably reduced because the bit-rate for encoding the maximum depth level $\delta$ (some bits) is lower than the bit-rate for encoding the binary flags relative to the nodes at the maximum depth level $\delta$.

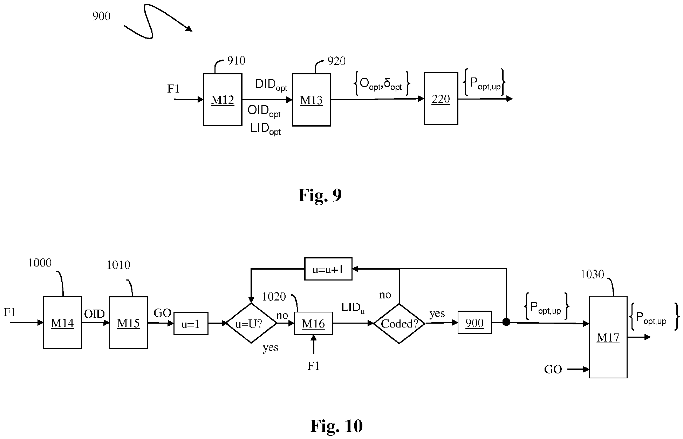

**Fig.** 9 shows schematically a diagram of the steps of the method 900 for decoding, from a bitstream, the geometry of a point cloud representing a 3D object in accordance with an example of the present principles.

In step 910, a module M12 decodes a depth information data $DID_{opt}$ representative of said maximum depth level $\delta_{opt}$.

The module M12 then decodes, from the bitstream F1 and according to the maximum depth level $\delta_{opt}$, an octree information data $OID_{opt}$ representative of an octree-based structure $O_{opt}$, and a leaf node information data $LID_{opt}$ indicating if a leaf cube of said octree-based structure $O_{opt}$ includes a point representative of at least one point $P_{or}$ of the point cloud IPC.

In step 920, a module M13 obtains an octree-based structure $O_{opt}$ from the octree information data $OID_{opt}$, and if the leaf node information data $LID_{opt}$ indicates that a leaf cube of said octree-based structure $O_{opt}$ includes a point representative of at least one point $P_{or}$ of the point cloud IPC, adds a point to said leaf cube, preferably in its center.

In an optional step 220, as described in relation with **Fig. 2**, the module M2 obtains up-sampled points $P_{opt,up}$ by up-sampling recursively points $P_{opt}$ associated with leaf cubes of said octree-based structure $O_{opt}$ until the resolution level $\pi_k$ of said points $P_{opt}$ reaches an expected resolution level $\pi exp_k$..

The points $P_{opt,up}$ are the decoded points of the point cloud IPC.

**Fig. 10** shows schematically a diagram of the steps of a variant of the method of **Fig. 9**;

In step 1000, a module M14 decodes, from the bitstream F1, an octree information data OID representative of a global octree-based structure GO.

In step 1010, a module M15 obtains a global octree-based structure GO from the octree information data OID.

In step 1020, a module M16 decodes, from the bitstream F1, a leaf node information data $LID_u$ indicating if a $LOU_u$ is a coded or non-coded $LOU_u$.

If the leaf node information data $LID_u$ indicates that a $LOU_u$ is non-coded, another $LOU_u$ is considered.

If the leaf node information data $LID_u$ indicates that a $LOU_u$ is coded, a local maximum depth level $\delta_{opt,u}$

is decoded from the bitstream, an octree information data $OID_{opt,u}$ representative of a local octree-based structure $O_{opt,u}$ is obtained from the bitstream and according to the maximum depth level $\delta_{opt}$, and a leaf node information data $LID_{opt,u}$ indicating if a leaf cube of said local octree-based structure includes a point representative of at least one point of the point cloud are decoded by the decoding method of **Fig. 9**.

Optionally points $P_{opt,u}$ are also obtained from the decoding method of **Fig. 9**.

Another $LOU_u$ is then considered.

Once all the $LOU_u$ of the global octree-based structure GO have been considered, in step 1030, a module M17 fuses together the point $P_{opt,u}$ in leaf cubes associated with leaf nodes of said local octree-based structure $O_{opt,u}$ for all the $LOU_u$, (or optionally the $P_{opt,up}$) to get the decoded points of the point cloud IPC.

According to an embodiment of the decoding method, the octree information data (OID, $OID_{opt}$, $OID_{opt,u}$) may comprise a binary flag per node to indicate if a cube associated with a node is split or not

According to an embodiment of the decoding method, the leaf node information data ($LID_{opt}$, $LID_{opt,u}$) may comprise a binary flag indicating if a leaf cube of an octree-based structure includes or not a point representative of at least one point $P_{or}$ of the point cloud IPC.

According to an embodiment of the decoding method, the leaf node information $LID_u$ may comprise at least one bit indicating if a $LOU_u$ is a coded or a non-coded leaf cube.

According to an embodiment of the decoding method, the depth information data ($DID_{opt}$, $DID_{opt,u}$) may comprise a set of bits representative of a maximum depth level of an octree-based structure.

According to an embodiment of the decoding method, the octree information data (OID, $OID_{opt}$, $OID_{opt,u}$) and/or the leaf node information data ($LID_{opt}$, $LID_{opt,u}$, $LID_u$) and/or the depth information data ($DID_{opt}$, $DID_{opt,u}$) may be decoded using an entropy decoder like CABAC (a description of the CABAC is found in the specification of HEVC at http://www.itu.int/rec/T-REC-H.265-201612-I/en).

According to a variant of the decoding method, the binary flags indicating if cubes associated with nodes are split or not are not decoded for the nodes at a maximum depth level ($\delta_{opt}$, $\delta_{opt,u}$). Thus, the octree information data ($OID_{opt}$, $OID_{opt,u}$) comprises a binary flag per node to indicate that a cube associated with a node is split or not except for the nodes at the maximum depth level ($\delta_{opt}$, $\delta_{opt,u}$).

Thus, the decoding method decodes a binary flag associated with a node at a specific depth and creates child nodes according to the value of said binary flag. When the depth reaches the maximum depth level ($\delta_{opt}$, $\delta_{opt,u}$), the method stops and does not create new child nodes.

On **Fig. 1-10**, the modules are functional units, which may or not be in relation with distinguishable physical units. For example, these modules or some of them may be brought together in a unique component or circuit, or contribute to functionalities of a software. *A contrario*, some modules may potentially be composed of separate physical entities. The apparatus which are compatible with the present principles are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

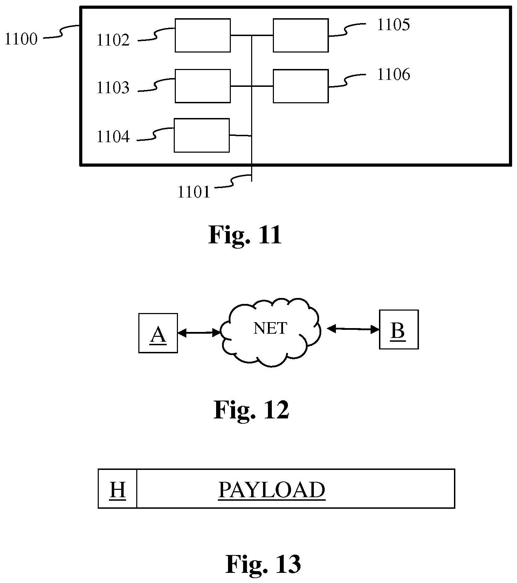

**Fig. 11** represents an exemplary architecture of a device 1100 which may be configured to implement a method described in relation with **Fig. 1-10**.

Device 1100 comprises following elements that are linked together by a data and address bus 1101:

- a microprocessor 1102 (or CPU), which is, for example, a DSP (or Digital Signal Processor);
- a ROM (or Read Only Memory) 1103;
- a RAM (or Random Access Memory) 1104;
- an I/O interface 1105 for reception of data to transmit, from an application; and
- a battery 1106.

In accordance with an example, the battery 1106 is external to the device. In each of mentioned memory, the word « register » used in the specification can correspond to area of small capacity (some bits) or to very large area (e.g. a whole program or large amount of received or decoded data). The ROM 1103 comprises at least a program and parameters. The ROM 1103 may store algorithms and instructions to perform techniques in accordance with present principles. When switched on, the CPU 1102 uploads the program in the RAM and executes the corresponding instructions.

RAM 1104 comprises, in a register, the program executed by the CPU 1102 and uploaded after switch on of the device 1100, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder, the point cloud IPC is obtained from a source. For example, the source belongs to a set comprising:

- a local memory (1103 or 1104), e.g. a video memory or a RAM (or Random Access Memory), a flash memory, a ROM (or Read Only Memory), a hard disk ;
- a storage interface (1105), e.g. an interface with a mass storage, a RAM, a flash memory, a ROM, an optical disc or a magnetic support;
- a communication interface (1105), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Semiconductor)).

In accordance with an example of the decoding or a decoder, the decoded points of the point cloud is sent to a destination; specifically, the destination belongs to a set comprising:

- a local memory (1103 or 1104), e.g. a video memory or a RAM, a flash memory, a hard disk ;
- a storage interface (1105), e.g. an interface with a mass storage, a RAM, a flash memory, a ROM, an optical disc or a magnetic support;
- a communication interface (1105), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface);
- a rendering device; and
- a display.

In accordance with examples of encoding or encoder, the bitstream F1 is sent to a destination. As an example, the bitstream F1 is stored in a local or remote memory, e.g. a video memory (1104) or a RAM (1104), a hard disk (1103). In a variant, the bitstream F1 is sent to a storage interface (1105), e.g. an interface with a mass storage, a flash memory, ROM, an optical disc or a magnetic support and/or transmitted over a communication interface (1105), e.g. an interface to a point to point link, a communication bus, a point to multipoint link or a broadcast network.

In accordance with examples of decoding or decoder, the bitstream F1 is obtained from a source. Exemplarily, a bitstream is read from a local memory, e.g. a video memory (1104), a RAM (1104), a ROM (1103), a flash memory (1103) or a hard disk (1103). In a variant, the bitstream is received from a storage interface (1105), e.g. an interface with a mass storage, a RAM, a ROM, a flash memory, an optical disc or a magnetic support and/or received from a communication interface (1105), e.g. an interface to a point to point link, a bus, a point to multipoint link or a broadcast network.

In accordance with examples, device 1100 being configured to implement an encoding method described in relation with **Fig. 1-8**, belongs to a set comprising:

- a mobile device ;
- a smartphone or a TV set with 3D capture capability
- a communication device ;
- a game device ;
- a tablet (or tablet computer) ;
- a laptop ;
- a still imagecamera;
- a video camera ;
- an encoding chip;
- a still image server; and
- a video server (e.g. a broadcast server, a video-on-demand server or a web server).

In accordance with examples, device 1100 being configured to implement a decoding method described in relation with **Figs. 3**, **9-10**, belongs to a set comprising:

- a mobile device ;
- a Head Mounted Display (HMD)
- (mixed reality) smartglasses
- an holographic device
- a communication device ;
- a game device ;
- a set top box;
- a TV set;
- a tablet (or tablet computer) ;
- a laptop ;
- a display
- a sterescopic display and
- a decoding chip.

According to an example of the present principles, illustrated in **Fig. 12**, in a transmission context between two remote devices A and B over a communication network NET, the device A comprises a processor in relation with memory RAM and ROM which are configured to implement a method for encoding a colored point cloud as described in relation with the **Figs. 1-8** and the device B comprises a processor in relation with memory RAM and ROM which are configured to implement a method for decoding as described in relation with **Figs. 3**, **9-10**.

In accordance with an example, the network is a broadcast network, adapted to broadcast encoded colored point clouds from device A to decoding devices including the device B.

A signal, intended to be transmitted by the device A, carries the bitstream F1.

This signal may thus carry at least one octree information data (OID, $OID_{opt}$, $OID_{opt,u}$) and/or at least one leaf node information data ($LID_{opt}$, $LID_{opt,u}$, $LID_u$) and/or at least one depth information data ($DID_{opt}$, $DID_{opt,u}$) and the octree information data OID.

**Fig. 13** shows an example of the syntax of such a signal when the data are transmitted over a packet-based transmission protocol. Each transmitted packet P comprises a header H and a payload PAYLOAD.

According to embodiments, the payload PAYLOAD may comprise at least one of the following elements:

- an octree information data $OID_{opt}$ representative of said optimal octree-based structure $O_{opt}$ with a maximum depth level $\delta_{opt}$;
- a leaf node information data $LID_{opt}$ indicating if a leaf cube of said optimal octree-based structure $O_{opt}$ includes a point representative of at least one point $P_{or}$;
- a depth information data $DID_{opt}$ representative of said maximum depth level $\delta_{opt}$;
- an octree information data OID representative of a global octree-based structure GO;
- a leaf node information data $LID_u$ indicating if a $LOU_u$ is a coded or non-coded $LOU_u$; and
- if the leaf node information data $LID_u$ indicates that a $LOU_u$ is coded,
- another octree information data $OID_{opt,u}$ representative of a local octree-based structure with a local maximum depth level $\delta_{opt,u}$;

  - another leaf node information data $LID_{opt,u}$ indicating if a leaf cube of said local octree-based structure includes a point representative of at least one point of the point cloud; and
  - a depth information data $DID_{opt,u}$ representative of said maximum depth level $\delta_{opt,u}$;

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, a HMD, smart glasses, and any other device for processing an image or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example of the present principles, or to carry as data the actual syntax-values written by a described example of the present principles. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding the geometry of a point cloud representing a 3D object comprising:

   a) obtaining (210) at least one candidate octree-based structure ($O_k$) with a maximum depth level ($\delta_k$) from the points of said point cloud, each candidate octree-based structure ($O_k$) approximating the geometry of the point cloud by points associated with leaf cubes, each leaf cube being associated with a leaf node of said candidate octree-based structure ($O_k$);
   b) obtaining (230) a coding cost ($C_k$) for said at least one candidate octree-based structure ($O_k$) with a maximum depth level ($\delta_k$);
   c) encoding (250) an optimal octree-based structure ($O_{opt}$) with a maximum depth level ($\delta_{opt}$) obtained by optimizing (240) said coding cost obtained for said at least one candidate octree-based structure ($O_k$); and
   d) encoding (260) a depth information data (DID$_{opt}$) representative of the maximum depth level ($\delta_{opt}$) of said optimal octree-based structure ($O_{opt}$).

2. A device for encoding the geometry of a point cloud representing a 3D object comprising means for:

   a) obtaining at least one candidate octree-based structure ($O_k$) with a maximum depth level ($\delta_k$) from the points of said point cloud, each candidate octree-based structure ($O_k$) approximating the geometry of the point cloud by points associated with leaf cubes, each leaf cube being associated with a leaf node of said candidate octree-based structure ($O_k$);
   b) obtaining a coding cost ($C_k$) for said at least one candidate octree-based structure ($O_k$) with a maximum depth level ($\delta_k$);
   c) encoding an optimal octree-based structure ($O_{opt}$) with a maximum depth level ($\delta_{opt}$) obtained by optimizing said coding cost obtained for said at least one candidate octree-based structure ($O_k$); and
   d) encoding a depth information data (DID$_{opt}$) representative of the maximum depth level ($\delta_{opt}$) of said optimal octree-based structure ($O_{opt}$).

3. The method of claim 1 or the device of claim 2, wherein a coding cost ($C_k$) obtained for a candidate octree-based structure ($O_k$) depends on a distortion ($D_k$) taking into account spatial distances between, on one hand, the points ($P_{or}$) of the point cloud and on the other hand, the points ($P_k$) associated with the leaf cubes of said candidate octree-based structure ($O_k$), and a bit-rate ($R_k$) for encoding said candidate octree-based structure ($O_k$) and for encoding its maximum depth level ($\delta_k$).

4. The method of claim 1 or 3 or the device of claim 2-3, wherein the method also comprises a step of or the device also comprises means for obtaining (220) up-sampled points ($P_{k,up}$) by up-sampling recursively points ($P_k$) associated with leaf cubes of said at least one candidate octree-based structure until the resolution level ($\pi_k$) of said points ($P_k$) reaches an expected resolution level $\pi exp_k$).

5. The method or the device of claim 4, wherein the distortion ($D_k$) takes into account spatial distances between, on one hand, the points ($P_{or}$) of the point cloud and on the other hand, said up-sampled points ($P_{k,up}$).

6. The method of one of the claims 1, 3-5 or the device of one of the claims 2-5, the method also comprises a step of or the device also comprises means for:

   - determining (700) a global octree-based structure (GO) comprising at least one cube, by splitting recursively a cube encompassing the point cloud until the leaf cubes, associated with the leaf nodes of said global octree-based structure (GO), reach down an expected size;
   - encoding (710) an octree information data (OID) representative of the global octree-based structure (GO);
   - encoding (720) a leaf node information data (LID$_u$) indicating if a leaf cube (LOU$_u$) associated with each leaf node of said global octree-based structure (GO) is coded or not;
   - if the leaf node information data (LID$_u$) indicates that a leaf cube (LOU$_u$) associated with a leaf node of said global octree-based structure (GO) is encoded, encoding (210-250) the geometry of the points of the point cloud included in said leaf cube by executing the steps a-d).

7. The method of claim 1, 3-6 or the device of claim 2-6, wherein encoding an octree-based structure

($O_{opt}$, $O_{opt,u}$) comprises encoding an octree information-tion data ($OID_{opt}$, $OID_{opt,u}$) representative of said optimal octree-based structure, and a leaf node information data ($LID_{opt}$, $LID_{opt,u}$) indicating if a leaf cube of said octree-based structure ($O_{opt}$, $O_{opt,u}$) includes a point representative of at least one point ($P_{or}$) of the point cloud.

8. The method or the device of claim 7, wherein an octree information data ($OID_{opt}$, $OID_{opt,u}$) may comprise a binary flag per node to indicate if a cube associated with a node is split or not except for the nodes at the maximum depth level ($\delta_{opt}$, $\delta_{opt,u}$) of said octree-based structure ($O_{opt}$, $O_{opt,u}$).

9. A method for decoding, from a bitstream, the points of a point cloud representing a 3D object comprising:

   a) decoding (910) a depth information data ($DID_{opt}$) representative of a maximum depth level ($\delta_{opt}$) of said octree-based structure ($O_{opt}$).
   b) decoding (910), from the bitstream and according to the maximum depth level ($\delta_{opt}$), an octree information data ($OID_{opt}$) representative of an octree-based structure ($O_{opt}$), and a leaf node information data ($LID_{opt}$) indicating if a leaf cube of said octree-based structure ($O_{opt}$) includes a point representative of at least one point ($P_{or}$) of the point cloud; and
   c) obtaining (920) an octree-based structure ($O_{opt}$) from the octree information data ($OID_{opt}$), and if the leaf node information data ($LID_{opt}$) indicates that a leaf cube of said octree-based structure ($O_{opt}$) includes a point representative of at least one point ($P_{or}$) of the point cloud, adding a point ($P_{opt}$) to said leaf cube.

10. A device for decoding, from a bitstream, the points of a point cloud representing a 3D object comprising means for:

   a) decoding a depth information data ($DID_{opt}$) representative of a maximum depth level ($\delta_{opt}$) of said octree-based structure ($O_{opt}$).
   b) decoding, from the bitstream and according to the maximum depth level ($\delta_{opt}$), an octree information data ($OID_{opt}$) representative of an octree-based structure ($O_{opt}$), and a leaf node information data ($LID_{opt}$) indicating if a leaf cube of said octree-based structure ($O_{opt}$) includes a point representative of at least one point ($P_{or}$) of the point cloud; and
   c) obtaining an octree-based structure ($O_{opt}$) from the octree information data ($OID_{opt}$), and if the leaf node information data ($LID_{opt}$) indicates that a leaf cube of said octree-based structure ($O_{opt}$) includes a point representative of at least one point ($P_{or}$) of the point cloud, adding a point ($P_{opt}$) to said leaf cube.

11. The method of claim 9 or the device of claim 10, wherein the method also comprises a steps of or the device also comprises means for obtaining up-sampled points ($P_{opt,up}$) by up-sampling recursively points ($P_{opt}$) associated with leaf cubes of said at least one octree-based structure ($O_{opt}$) until the resolution level ($\pi_k$) of said points ($P_k$) reaches an expected resolution level ($\pi exp_k$).

12. The method of claim 9 or 11 or the device of claim 10-11, wherein the method also comprises the steps of or the device also comprises means for:

   - decoding (1000), from the bitstream, an octree information data (OID) representative of a global octree-based structure (GO);
   - obtaining (1010) said global octree-based structure (GO) from the octree information data (OID);
   - decoding (1020), from the bitstream, a leaf node information data ($LID_u$) indicating if a leaf cube ($LOU_u$) associated with each leaf node of said global octree-based structure (GO) is encoded or not; and
   - if the leaf node information data ($LID_u$) indicates that a leaf cube ($LOU_u$) associated with a leaf node of said global octree-based structure (GO) is coded, decoding (910-920,220) points included in said leaf cube by executing the steps a-c); and
   - fusing (1030) the decoded points for all the leaf cubes of said global octree-based structure (GO).

13. The method of claim 9, 11-13, wherein decoding (910, 920) an octree-based structure ($O_{opt}$, $O_{opt,u}$) comprises decoding an octree information data ($OID_{opt}$, $OID_{opt,u}$) representative of said optimal octree-based structure, and a leaf node information data ($LID_{opt}$, $LID_{opt,u}$) indicating if a leaf cube of said octree-based structure ($O_{opt}$, $O_{opt,u}$) includes a point representative of at least one point ($P_{or}$) of the point cloud.

14. The method or the device of claim 13, wherein an octree information data ($OID_{opt}$, $OID_{opt,u}$) may comprise a binary flag per node to indicate if a cube associated with a node is split or not except for the nodes at the maximum depth level ($\delta_{opt}$, $\delta_{opt,u}$) of said octree-based structure ($O_{opt}$, $O_{opt,u}$).

15. A signal carrying information data representative of a point cloud, wherein the signal also carries:

   - at least one octree information data representative of at least one octree-based structure; and

- at least one leaf node information data indicating if a leaf cube of said at least one octree-based structure includes a point representative of at least one point of the point cloud; and
- at least one depth information data representative of the maximum depth level of said at least one octree-based structure.

16. The signal of claim 15, wherein said at least one octree information data ($OID_{opt}$, $OID_{opt,u}$) comprises a binary flag per node to indicate if a cube associated with a node is split or not except for the nodes at the maximum depth level ($\delta_{opt}$, $\delta_{opt,u}$) of said at least one octree-based structure ($O_{opt}$, $O_{opt,u}$).

17. A non-transitory processor-readable medium having stored thereon instructions to execute the steps of a method according to one of claims 1, 3-9, 11-14 when this program is executed on a computer.

depth 0

depth 1

maximum depth

**Fig. 1**

Fig. 2

Fig. 3

**Fig. 4a**

**Fig. 4b**

**Fig. 5**

230

$\left\{ O_k \delta_k, \right\}$

$\left\{ P_k \right\}$

$\left\{ P_{k,up} \right\}$

620

$\left\{ P_{OR} \right\}$ — 610 $D_k$ 630 $R_k$

$C_k$

**Fig. 6**

710

M10 — OID

GO

700

IPC — M9 $\left\{ LOU_u \right\}$ u=1 u=U? yes 720 M11 $\left\{ P_{OR,u} \right\}$ 200 $DID_{opt,u}$ $OID_{opt,u}$ $LID_{opt,u}$

no

LID_u — F1

u=u+1

**Fig. 7**

**Fig. 6a**

**Fig. 6b**

**Fig. 8**

900

910                           920

F1 ──→ | M12 | $DID_{opt}$ | M13 | $\{O_{opt}, \delta_{opt}\}$ | 220 | $\{P_{opt,up}\}$ ──→

$OID_{opt}$

$LID_{opt}$

**Fig. 9**

1000          1010                                          u=u+1                      1030

F1 ──→ | M14 | OID | M15 | GO | u=1 | → ◇u=U? no → | M16 | $LID_u$ → ◇Coded? yes → | 900 | ● $\{P_{opt,up}\}$ → | M17 | $\{P_{opt,up}\}$ →

1020                                no

yes

F1                               GO ──→

**Fig. 10**

**Fig. 11**

**Fig. 12**

| H | PAYLOAD |
|---|---------|

**Fig. 13**

Europäisches
Patentamt

European
Patent Office

Office européen
des brevets

**EUROPEAN SEARCH REPORT**

Application Number

EP 17 30 6344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG I W ET AL: "Progressive compression and transmission of PointTexture images", JOURNAL OF VISUAL COMMUNICATION AND IMAGE REPRESENTATION, ACADEMIC PRESS, INC, US, vol. 17, no. 5, 1 October 2006 (2006-10-01), pages 1090-1107, XP024905084, ISSN: 1047-3203, DOI: 10.1016/J.JVCIR.2005.10.001 [retrieved on 2006-10-01] * abstract * * sections 3 to 6 * | 1-17 | INV. G06T9/40 H04N19/147 H04N19/46 H04N19/96 |
| X | EP 1 431 919 A1 (SAMSUNG ELECTRONICS CO LTD [KR]; SEOUL NAT UNIV IND FOUNDATION [KR]) 23 June 2004 (2004-06-23) * paragraphs [0041] - [0048], [0055] - [0063], [0068] - [0073] * | 1-17 | |
| X | AINALA KHARTIK ET AL: "An improved enhancement layer for octree based point cloud compression with plane projection approximation", PROCEEDINGS OPTICAL DIAGNOSTICS OF LIVING CELLS II, SPIE, US, vol. 9971, 27 September 2016 (2016-09-27), pages 99710R-99710R, XP060078033, ISSN: 0277-786X, DOI: 10.1117/12.2237753 ISBN: 978-1-5106-1324-9 * the whole document * | 1,2,9, 10,15,17 | TECHNICAL FIELDS SEARCHED (IPC) G06T H04N |

-/--

The present search report has been drawn up for all claims

| Place of search | Date of completion of the search | Examiner |
|---|---|---|
| Berlin | 6 March 2018 | Santos Luque, Rocio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches Patentamt
European Patent Office
Office européen des brevets

Application Number

EP 17 30 6344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIN TANG ET AL: "Compression algorithm of scattered point cloud based on octree coding", 2016 2ND IEEE INTERNATIONAL CONFERENCE ON COMPUTER AND COMMUNICATIONS (ICCC), IEEE, 14 October 2016 (2016-10-14), pages 85-89, XP033094437, DOI: 10.1109/COMPCOMM.2016.7924670 [retrieved on 2017-05-10] * abstract * * section 2 * | 1,2,9, 10,15,17 | |
| A | KARTHIK AINALA ET AL: "Point Cloud Geometry Compression with Plane Projection Approximation", 116. MPEG MEETING; 17-10-2016 - 21-10-2016; CHENGDU; (MOTION PICTURE EXPERT GROUP OR ISO/IEC JTC1/SC29/WG11),, no. m39435, 15 October 2016 (2016-10-15), XP030067781, * pages 1-2 * | 1-17 | |
| A | SEBASTIEN LASSERRE: "Point Cloud Compression presentation to the video groups", 118. MPEG MEETING; 3-4-2017 - 7-4-2017; HOBART; (MOTION PICTURE EXPERT GROUP OR ISO/IEC JTC1/SC29/WG11),, no. m40715, 6 April 2017 (2017-04-06), XP030069059, * sentences 11,13 * | 1-17 | TECHNICAL FIELDS SEARCHED (IPC) |

The present search report has been drawn up for all claims

| Place of search | Date of completion of the search | Examiner |
|---|---|---|
| Berlin | 6 March 2018 | Santos Luque, Rocio |

EPO FORM 1503 03.82 (P04C01)

page 2 of 2

## ANNEX TO THE EUROPEAN SEARCH REPORT
## ON EUROPEAN PATENT APPLICATION NO.

EP 17 30 6344

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2018

| Patent document cited in search report | | Publication date | Patent family member(s) | | Publication date |
|---|---|---|---|---|---|
| EP 1431919 | A1 | 23-06-2004 | CN | 1549206 A | 24-11-2004 |
| | | | EP | 1431919 A1 | 23-06-2004 |
| | | | JP | 4166679 B2 | 15-10-2008 |
| | | | JP | 2004185628 A | 02-07-2004 |

EPO FORM P0459

For more details about this annex : see Official Journal of the European Patent Office, No. 12/82